# EUROPÄISCHE PATENTANMELDUNG

(11) **EP 3 889 767 A1**
(43) Veröffentlichungstag der Anmeldung: **06.10.2021**
(21) Anmeldenummer: 20167131.0
(22) Anmeldetag: 31.03.2020
(51) Int. Cl.: G06F 8/658, G06F 11/14, G06F 9/455

(54) **VERFAHREN ZUM QUASI-UNTERBRUCHFREIEN PATCHEN VON EINEM WINDOWS-SYSTEM**

(71) Anmelder: Siemens Mobility AG, 8304 Wallisellen (CH)
(72) Erfinder: LOCHER, Viktor, 8200 Schaffhausen (CH)
(74) Vertreter: Deffner, Rolf

(57) **Zusammenfassung**

Die vorliegende Erfindung offenbart ein Verfahren zum quasiunterbruchsfreien Patchen von einem eine insbesondere sicherheitsrelevante Applikation ausführenden Windows-System (WR), umfassend:
a) Aufsetzen des die Applikation (ILTIS) ausführenden Windows-Systems (WR) in einer Produktiv-Instanz (2) mit einer eigenen Produktiv-Speicherinstanz (6) und einer Passiv-Instanz (4) mit einer eigenen Passiv-Speicherinstanz (8);
b) Installieren der Applikation (ILTIS) und ggfs. von für ihre Ausführung erforderlichen Daten auf einer weiteren Applikations-Speicherinstanz (10) und Verbinden dieser Applikations-Speicherinstanz (10) mit der Produktiv-Instanz (4) ;
c) Ausrüsten der Produktiv-Instanz (2) und der Passiv-Instanz (4) mit je einer Netzwerkkarte (12, 16 bzw. 14, 18) für ein Produktiv-Netzwerk (20) und ein Passiv-Netzwerk (22), wobei die Produktiv-Instanz (2) nur mit dem Produktiv-Netzwerk (20) und die Passiv-Instanz (4) nur mit dem Passiv-Netzwerk (22) verbunden ist,
d) Patchen der Passiv-Instanz (4) mit einer neuen Windows-Version über das Passiv-Netzwerk (22), wobei:
e) eine externe Supervisor-Instanz (iHME) bereitgestellt wird, mit der bedienergesteuert über eine der Supervisor-Instanz (iHME) eigenen Benutzeroberfläche:
e1) nach erfolgreicher Installation des Patches der neuen Windows-Version die Produktiv-Instanz (2) und die Passiv-Instanz (4) heruntergefahren werden;
e2) die Applikations-Speicherinstanz (10) von der Produktiv-Instanz (2) auf die Passiv-Instanz (4) umgehängt wird;
e3) an der Produktiv-Instanz (2) die Netzwerkkarte (12) für das Produktiv-Netzwerk (20) durch die Netzwerkkarte (14) für das Passiv-Netzwerk (22) und an der Passiv-Instanz (4) die Netzwerkkarte (18) für das Passiv-Netzwerk (22) durch die Netzwerkkarte (16) für das Produktiv-Netzwerk (20) ausgetauscht wird; und
e4) nach erfolgreichem Abschluss der Schritte e1) bis e3) die bisherige Passiv-Instanz (4) als Produktiv-Instanz (2) und die bisherige Produktiv-Instanz (2) als Passiv-Instanz (4) neu gestartet werden.

## Beschreibung

Die vorliegende Erfindung betrifft ein Verfahren zum quasi-unterbruchfreien Patchen von einem eine insbesondere sicherheitsrelevante Applikation ausführenden Windows-System.

Windows-Systeme werden solche Computersysteme genannt, die mit einem Betriebssystem OS der Microsoft Corp. ausgestattet sind. Ein derartiges Betriebssystem steuert die Abarbeitung von Operationen durch den eigentlichen Mikroprozessor, das Daten- und Speichermanagement, die Verwaltung der laufenden Anwenderprogramme und Applikationen, sämtliche Schnittstellen für Umsystem, wie Maus, Tastatur, Drucker, Scanner, Bildschirm, sowie sämtliche Kommunikationsschnittstellen usw.

Aufgrund der Komplexität und im Zuge der ständigen Verbesserung derartiger Betriebssysteme sind diese Betriebssysteme stets auf dem neuesten Stand zu halten, besonders dann, wenn auf dem Computersystem eine sicherheitsrelevante Applikation ausgeführt wird, wie dies beispielsweise bei einer Anlagensteuerung für eine industrielle Anlage (pharmazeutisch-technische oder chemische Anlage, Stromerzeugung und dergleichen) oder auch bei einem Zugdispositionssystem zur Steuerung von schienengebundenem Verkehr der Fall ist.

Besonders aufwändig ist das wiederholte Patchen von Windows-Systemen, bei dem kleinere funktionale und Security-bezogene Verbesserungen und Korrekturen am Betriebssystem in das Betriebssystem eingespielt werden müssen. Das Update (Patching) von einem Windows-Betriebssystem bedeutet aber in der Regel, dass die Ausführung des laufenden Betriebssystems während der Installation des Patches beeinträchtigt ist, da sich das Betriebssystem während der Patch-Installation in einem nicht definierten Zustand befindet. Aus diesem Grunde dürfen/können auch derartige sicherheitsrelevante oder sonst wie kritische Applikationen während der Zeitdauer des Patches nicht ausgeführt werden.

Somit kann es während der Installation eines neuen Patches zu einem längeren Unterbruch der Funktionalität kommen. Ausserdem ist das Windows-System nach der Installation des Patches noch nicht voll betriebsbereit, sondern muss erst neu gestartet werden, was den Unterbruch der Funktionalität zusätzlich verlängert.

Es kann zudem vorkommen, dass ein Microsoft-Patch fehlerhaft ist und zu Problemen im Betriebssystem und/oder in der Applikation führt. In dieser Situation wäre es wünschenswert einen Rollback-Mechanismus zu haben, welcher das Computersystem auf den exakten Stand vor der Installation des Patches zurückschaltet. Eine derartige Möglichkeit wird jedoch leider von der Microsoft Corp. nicht angeboten. An dieser Stelle kann möglichweise nur das gesamte Neu-Aufsetzen des Betriebssystems Abhilfe schaffen, was zu einer noch längeren Unterbrechung der Funktionalität des Windows-Systems führt.

Der vorliegenden Erfindung liegt daher die Aufgabe zugrunde, ein Verfahren zum quasi-unterbruchfreien Patchen von einem eine insbesondere sicherheitsrelevante Applikation ausführenden Windows-System anzugeben, bei dem sowohl eine Rollback-Möglichkeit besteht als auch der Unterbruch der Funktionalität durch den Patch-Vorgang auf ein Mindestmass beschränkt wird.

Diese Aufgabe wird erfindungsgemäss durch ein Verfahren zum quasi-unterbruchfreien Patchen von einem eine insbesondere sicherheitrelevante Applikation ausführenden Windows-System gelöst, umfassend:
a) Aufsetzen des die Applikation ausführenden Windows-Systems in einer Produktiv-Instanz mit einer eigenen Produktiv-Speicherinstanz und einer Passiv-Instanz mit einer eigenen Passiv-Speicherinstanz;
b) Installieren der Applikation und ggfs. von für ihre Ausführung erforderlichen Daten auf einer Applikations-Speicherinstanz und Verbinden dieser Applikations-Speicherinstanz mit der Produktiv-Instanz;
c) Ausrüsten der Produktiv-Instanz und der Passiv-Instanz mit je einer Netzwerkkarte für ein Produktiv-Netzwerk und ein Passiv-Netzwerk, wobei die Produktiv-Instanz nur mit dem Produktiv-Netzwerk und die Passiv-Instanz nur mit dem Passiv-Netzwerk verbunden ist,
d) Patchen der Passiv-Instanz mit den benötigten Windows-Patches über das Passiv-Netzwerk, wobei:
e) eine externe Supervisor-Instanz bereitgestellt wird, mit der bedienergesteuert über eine der Supervisor-Instanz eigenen Benutzeroberfläche:
   e1) nach erfolgreicher Installation der Patches die Produktiv-Instanz und die Passiv-Instanz heruntergefahren werden;
   e2) die Applikations-Speicherinstanz von der Produktiv-Instanz auf die Passiv-Instanz umgehängt wird;
   e3) an der Produktiv-Instanz die Netzwerkkarte für das Produktiv-Netzwerk durch die Netzwerkkarte für das Passiv-Netzwerk und an der Passiv-Instanz die Netzwerkkarte für das Passiv-Netzwerk durch die Netzwerkkarte für das Produktiv-Netzwerk ausgetauscht wird; und
   e4) nach erfolgreichem Abschluss der Schritte e1) bis e3) die bisherige Passiv-Instanz als Produktiv-Instanz und die bisherige Produktiv-Instanz als Passiv-Instanz neu gestartet werden.

Auf diese Weise wird das Computersystem für die Applikation in zwei virtuellen Instanzen aufgebaut, wobei sich der Windows-Patch vollkommen rückwirkungsfrei für die Produktiv-Instanz auf der Passiv-Instanz installieren und testen lässt. Dieser Patch kann dadurch zu einem beliebigen Zeitpunkt vorgenommen werden und muss beispielsweise bei sicherheitskritischen Anwendungen im Bahnverkehr nicht in nächtlichen Randzeiten ausgeführt werden. Die eigentliche Übergangsdauer zur Umschaltung der gepatchten Passiv-Instanz in die dann aktive Produktiv-Instanz vollzieht sich in einer sehr kurzen Zeitspanne, weil im Besonderen virtuell aufgesetzte Instanzen sehr rasch rebootet werden können. Somit wird der betriebliche Impact des Patchens auf eine sehr kleine Zeitdauer, wie z.B. nur einige Sekunden, minimiert. Besonders hilfreich ist hier auch der Einsatz der Supervisor-Instanz, die im einfachsten Fall von nur einem Memory-Stick aus gestartet und ausgeführt werden kann («Live-System») und die sich über ein vSpere-API an der Virtualisierungs-Schicht ankoppeln kann.

In logischer Weiterbildung der vorliegenden Erfindung kann dann nach einer vorgebbaren Zeitdauer auch die ehemalige Produktiv-Instanz auf die neue Windows-Version gepatcht werden. Sie bleibt aber dann weiter die Passiv-Instanz bis der nächste Windows-Patch ansteht.

Eine besonders vorteilhafte Ausgestaltung der Erfindung kann erzielt werden, wenn nach dem Neustart der bisherigen Passiv-Instanz (4) als Produktiv-Instanz (2) und der bisherigen Produktiv-Instanz (2) als Passiv-Instanz (4) auch ein Rollback ausgeführt werden kann, der vorherige Produktiv-Instanz (2) dann auch wieder als Produktiv-Instanz (2) und die vorherige Passiv-Instanz (4) dann auch wieder als Passiv-Instanz (4) ausführt. Auf diese Weise können eventuell doch nach dem Patchen und dem Umschalten auftretende Probleme isoliert werden. Die eigentliche Applikation kann nach einem kurzen Unterbruch zwecks Rollback zum Zurück-Umschalten auf die Situation vor dem Umschalten wieder störungsfrei ausgeführt werden. Allfällige Fehler können dann auf der Passiv-Instanz analysiert und behoben werden.

In einer weiteren vorteilhaften Ausgestaltung der vorliegenden Erfindung kann die Supervisor-Instanz so ausgestaltet sein, dass benutzergesteuert über deren Benutzeroberfläche vollständig automatisiert anhand von geschützten Spezifikationen ein virtueller Applikationsrechner aufgesetzt werden kann, der die Produktiv-Instanz mit eigener Produktiv-Speicherinstanz, die Passiv-Instanz mit eigener Passiv-Speicherinstanz und die Applikations-Speicherinstanz umfasst.

Um hohe Sicherheitsstandards beim Patchen der Passiv-Instanz und bei der späteren Umschaltung der gepatchten Passiv-Instanz in die dann aktive Produktiv-Instanz garantieren zu können, werden die mittels der Supervisor-Instanz (iHME) ausgelösten Schritte e1) bis e4) hard-codiert und können damit über die Benutzeroberfläche der Supervisor-Instanz (10) benutzergesteuert ausgelöst werden. Auf diese Weise ist es ausgeschlossen, dass ein Anwender Konfigurationen des Patches und der Produktiv- und Passiv-Instanz «on the fly» bewusst oder aus Versehen verändern kann.

Bevorzugte Ausführungsbeispiel der vorliegenden Erfindung werden nachfolgend anhand der Zeichnung näher erläutert. Dabei zeigen:
- Figur 1: in schematischer Weise eine Benutzeroberfläche der Supervisor-Instanz zur Generierung virtueller Windows-Rechner für die Ausführung einer sicherheitskritischen Applikation, hier eines Zugdispositionssystems;
- Figur 2: in schematischer Weise das Set-up der virtuellen Windows-Rechner;
- Figur 3: in schematischer Darstellung den Aufbau eines Windows-Rechners für eine Leittechnikzelle des Zugdispositionssystems; und
- Figur 4: in schematischer Darstellung den eigentlichen Umschaltvorgang für den Wechsel auf einen neuen Windows-Patch der Produktiv-Instanz einer Leittechnikzelle.

Die vorliegende Erfindung wird hier nachfolgend nun am Beispiel eines Zugleitsystems (Zugdispositionssystem) erläutert. Ein derartiges Zugleitsystem wird von Siemens Mobility AG, Wallisellen, Schweiz, unter dem Namen ILTIS® Netz vertrieben. Mit diesem Zugleitsystem wird beispielsweise der gesamte Zugverkehr der Schweiz aus einer kleinen Anzahl von Zugleitständen von Fahrdienstleitern gesteuert. Hierzu ist das Eisenbahnnetzwerk der Schweiz in eine Anzahl von geographisch klar abgegrenzten Leittechnikzellen aufgeteilt worden, wobei jede Zelle mehrere (auch virtuell aufgesetzte) Windows-Rechner zur Ausführung der ILTIS-Applikation umfasst.

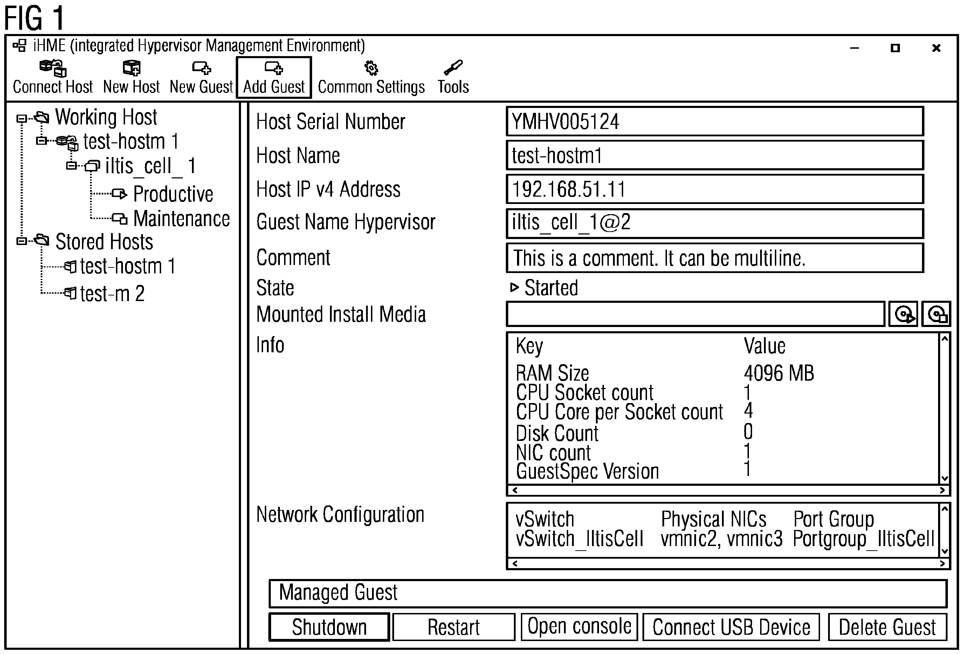

Um nun einen derartigen Windows-Rechner auf einen neuen Patch upzugraden, ist gemäss der vorliegenden Erfindung ein Verfahren zum quasi-unterbruchsfreien Patchen dieses die ILTIS-Applikation ausführenden Windows-Systems vorgesehen. Ein zentraler Bestandteil des Verfahrens ist dabei die Verwendung der System-Virtualisierung und einer Supervisor-Instanz - nachfolgend kurz als iHME (integrated Hypervisor Management Environment) bezeichnet - , deren Benutzeroberfläche schematisch in Figur 1 gezeigt ist. Über diesen iHME lässt sich die Virtualisierung des Windows-Rechners für eine bestimmte ILTIS-Zelle erzielen. Der iHME ist somit eine Management-Software, welche über die offiziellen vSpere-APIs sowohl ESX-Hosts (also der Rechner mit dem Hypervisor) als auch ESX-Guests (die virtuellen Rechner-Instanzen auf dem Host) aufsetzen und verwalten kann.

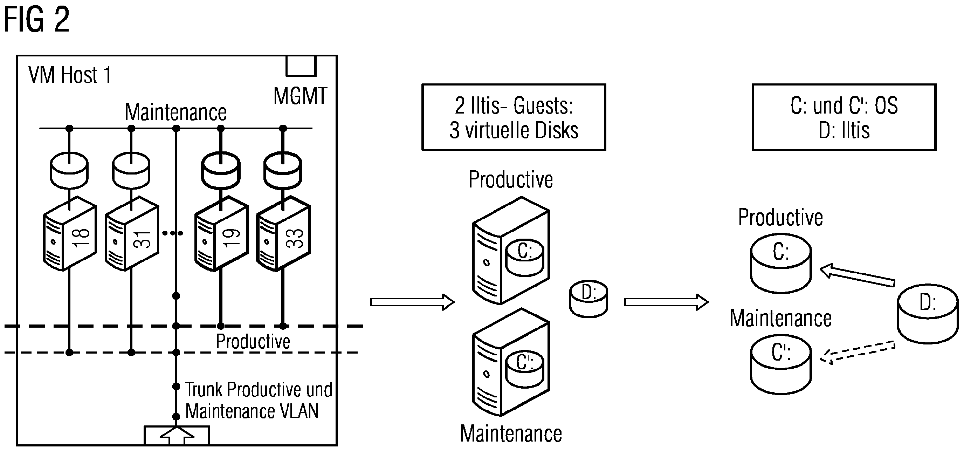

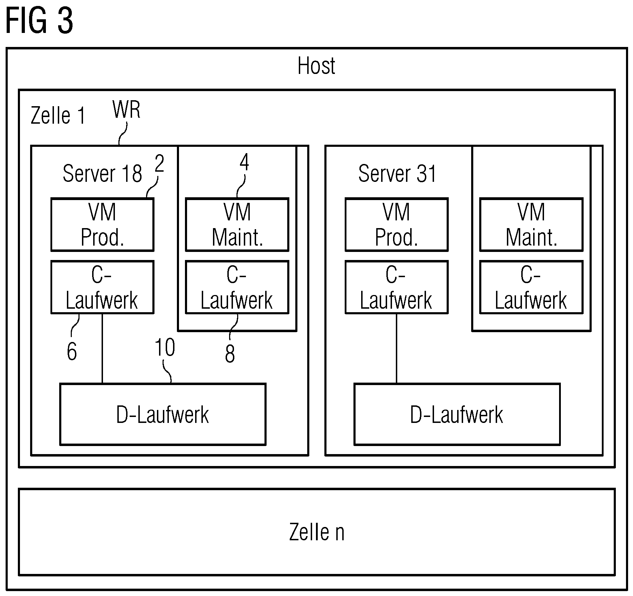

Die Figuren 2 und 3 zeigen schematisch das Set-Up zum Aufsetzen der virtuellen Windows-Rechner zum Ausführen der ILTIS-Software (ILTIS-Applikation). Im Zuge der Ausführung des Verfahrens wird somit der iHME zum Aufsetzen des die ILTIS-Applikation ausführenden Windows-Rechners WR als Guest-Pair in einer Produktiv-Instanz 2 mit einer eigenen Produktiv-Speicherinstanz 6 und einer Passiv-Instanz 4 mit einer eigenen Passiv-Speicherinstanz 8 verwendet. Dieses Aufsetzen erfolgt über versionierte und geschützte Spezifikationen (auch gehashed), sodass ein Anwender an der vorgesehenen Konfiguration nichts ändern und diese auch nicht on-the-fly vornehmen kann. Dieses Aufsetzen schliesst somit das Erstellen der virtuellen Hardware (vDisk, vRAM, vCPUs, vSwitches, vNICs usw.) ein.

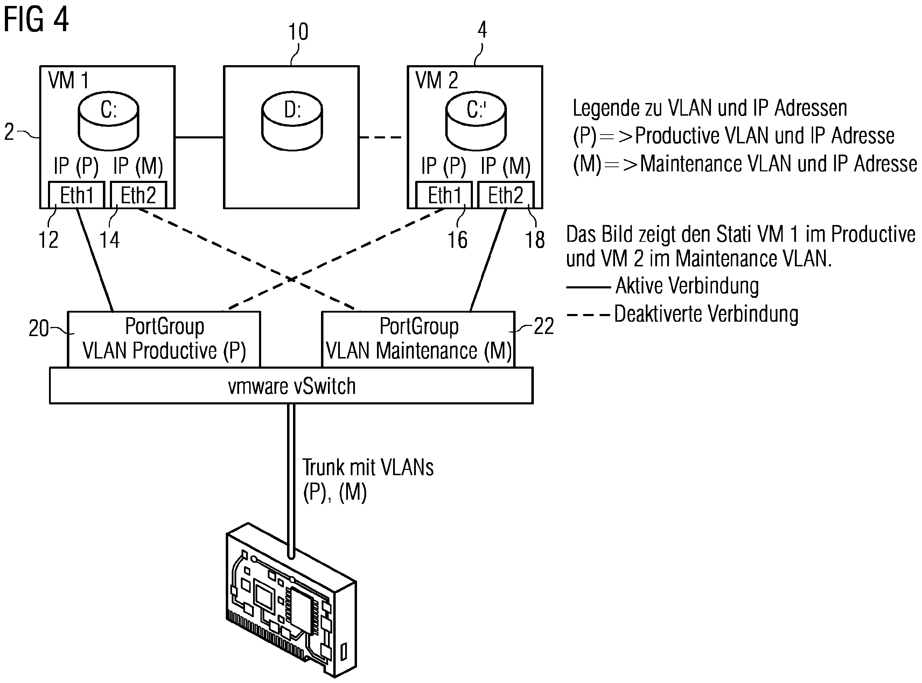

Mit dem iHME können nun auch die sogenannten Guest-Pairs verwaltet werden. Pro virtuellem Windows-Rechner WR gibt es somit die zwei Instanzen, die Produktiv-Instanz 2 und die Passiv-Instanz 4. Ausserdem wird mit dem IHME die ILTIS-Applikation und die für ihre Ausführung erforderlichen Daten auf einer weiteren Applikations-Speicherinstanz 10 (D-Laufwerk) installiert. Diese Applikations-Speicherinstanz 10 wird dann auch mit der Produktiv-Instanz 2 verbunden (wie in Figur 2 gezeigt). Diese vorstehend genannten Komponenten bilden somit den virtuellen Windows-Rechner WR. Im Zuge der Installation der Switches werden die Produktiv-Instanz 2 und die Passiv-Instanz 4 jeweils mit je einer Netzwerkkarte 12, 14, 16, 18 für ein Produktiv-Netzwerk 20 und ein Passiv-Netzwerk 22 ausgerüstet (vgl. Figur 4). Dabei wird die Produktiv-Instanz 2 nur mit dem Produktiv-Netzwerk 20 und die Passiv-Instanz 4 nur mit dem Passiv-Netzwerk 22 verbunden.

Steht nun ein Windows-Patch an, wird mittels des iHME die Installation des Patches zunächst nur auf der Passiv-Instanz 4 ausgeführt. Dabei kann die neue Windows-Version über das Passiv-Netzwerk 22 auf der Passiv-Instanz 4 (diese kann auch als Maintenance-Instanz bezeichnet werden) installiert werden. Diese Installation ist vollkommen rückwirkungsfrei für die Produktiv-Instanz 2. Auf diese Weise hat auch die zeitliche Dauer der Installation des Patches keinen Einfluss auf die ILTIS-Applikation, was ebenfalls auch für allfällige Reboots der Passiv-Instanz 4 gilt. Somit können nun auch die System-Eventlogs der Passiv-Instanz 4 nach dem Patchen geprüft werden, wodurch sichergestellt werden kann, dass die neue gepatche Windows-Version auf der Passiv-Instanz 4 wieder stabil läuft. Das Ausrollen und Installieren des Patches kann so zu einem beliebigen Zeitpunkt stattfinden; es muss so auch nicht in Randzeiten des Eisenbahnbetriebs stattfinden.

Nach dieser erfolgreichen Installation des Patches erfolgt dann die Umschaltung von Produktiv- und Passiv-Instanz. Mit dem iHME werden nun bedienergesteuert über die dem iHME-eigene Benutzeroberfläche (siehe Figur 1) die Produktiv-Instanz 2 und die gepatchte Passiv-Instanz 4 heruntergefahren. Dabei wird die die Applikations-Speicherinstanz 10 von der Produktiv-Instanz 2 auf die Passiv-Instanz 4 umgehängt und an der Produktiv-Instanz 2 wird die Netzwerkkarte 12 für das Produktiv-Netzwerk 20 durch die Netzwerkkarte 14 für das Passiv-Netzwerk 22 und an der Passiv-Instanz 4 die Netzwerkkarte 18 für das Passiv-Netzwerk 22 durch die Netzwerkkarte 16 für das Produktiv-Netzwerk 20 am virtuellen Switch umgehängt. Diese Situation ist in Figur 4 vor der Umschaltung gezeigt, was für die aktiven Verbindungen durch die durchgezogenen Linien und für die passiven Verbindungen durch die gestrichelten Linien repräsentiert. Nach der Umschaltung werden die durchgezogenen Linien zu gestrichelten Linien und die gestrichelten Linien zu durchgezogenen Linien. Nach dem erfolgreichem Abschluss dieser Schritte wird die bisherige Passiv-Instanz 4 als Produktiv-Instanz und die bisherige Produktiv-Instanz 2 als Passiv-Instanz neu gestartet werden.

Diese über die iHME initiierte Umschaltung wird über das vSphere-API realisiert. Die iHME steuert das Herunterfahren der Produktiv-Instanz 2 und der Passiv-Instanz 4, das Umhängen der Applikations-Speicherinstanz (Laufwerk D:/) und der beiden Netzwerkkarten beider Instanzen (Produktiv- und Passiv-Instanz) und den Neustart dieser beiden Instanzen. Diese haben nun ihre "Identitäten" vertauscht. Die ehemalige Produktiv-Instanz 2 verbleibt nun für eine vorbestimmbare Zeitdauer unverändert für Rollback-Szenarien erhalten. Nach Ablauf dieser Zeitdauer kann diese Instanz (nun als Passiv-Instanz) ebenfalls gepatcht werden, wobei durch diesen Vorgang ebenfalls keinerlei Rückwirkung auf die nun laufende Produktiv-Instanz 2 auftritt.

Wie in Figur 3 gezeigt, wird zum Beispiel bei der sicherheitskritischen ILTIS-Applikation beispielhaft ein zweiter virtueller und redundant betriebener Windows-Rechner analog dem soeben Beschriebenen betrieben. Darüberhinaus sei an dieser Stelle angemerkt, dass auch mehr als die zwei hier beschriebenen virtuellen Iltis-Rechner auf einem Host ausgeführt werden können.

Das Verfahren ist damit quasi-rückwirkungsfrei und kann zu einem beliebigen Zeitpunkt vorgenommen werden. Die Umschaltung von der ungepatchten auf die gepatchte Instanz dauert nur wenige Sekunden, da ein Reboot auf virtueller Hardware sehr rasch ausgeführt werden kann. Der Unterbruch der ILTIS-Applikation ist somit auf ein Minimum reduziert. Ein Rollback ist jederzeit möglich. Falls die gepatchte Instanz instabil laufen sollte, kann in wenigen Sekunden wieder auf die alte, stabile Umgebung zurückgeschaltet werden (erneutes Tauschen der Identitäten der beiden Instanzen).

Der durch das Verfahren bereitgestellte Mechanismus kann auch eingesetzt werden, um mit einer minimalen Down-time der Windows-Systeme und damit der ILTIS-Funktionalität von einer Version der Windows-Betriebssystems auf eine neue Version migrieren zu können.

Das vorstehend beschriebene Verfahren stellt zudem eine Lösung dar, die mit einem einzelnen Rechner realisiert werden kann. Es braucht also keine komplexe und daher meist auch teure Infrastruktur, wie z.B. das Clustering von Hosts in einem Rechenzentrum. Es braucht lediglich die Supervisor-Instanz iHME, die auf einem beliebigen Windows-Rechner laufen kann, welcher mit dem Management-Port des iHME temporär oder permanent verbunden ist. Der iHME hat somit einen minimalen Footprint und ist sogar aus einem von einem USB-Stick bootbaren mobilen Live-System lauffähig. Die Lösung ist zudem gleichermassen für grosse Umgebungen mit vielen virtuellen Windows-Rechnern, die auf einer Anzahl von Rechner (Hosts) verteilt sind, einsetzbar.

Die Lösung ist auch vergleichsweise einfach umsetzbar, weil sie zu einem grossen Teil auf in Windows-Systemen standardisierte Schnittstellen und Standard-Technologien zurückgreift, wie z.B. Windows-Betriebssystem und ESXi Hypervisor. Bereits mit einer Essential-Lizenz von VMWare ist das Verfahren voll funktionsfähig. Eine VMWare-Lizenz ist notwendig, damit mit dem iHME auf die ESXi-Schnittstellen zugegriffen bzw. eine Automatisierung des Verfahrens über die Schnittstellen vorgenommen werden kann.

Vorliegend ist das erfindungsgemässe Verfahren nun für eine Leittechnik-Applikation, hier ILTIS® Netz der Siemens Mobility AG, Wallisellen, Schweiz, erläutert worden. Grundsätzlich ist das Verfahren aber überall dort anwendbar, wo zeitkritisch oder sicherheitsrelevante Applikationen auf Windows-Rechnern ausgeführt werden, die nach von der Microsoft Corp. vorgegebenen Intervallen mit neuen Patches oder sogar neuen Betriebssystemversionen ausgeführt werden sollten oder sogar müssen. Derartige Prozesse (Applikationen) können beispielsweise in der Energieerzeugung und -übertragung, in der industriellen Fertigung, in Verkehrsleitsystemen für andere Fahrzeuggattungen usw. auf Windows-Rechnern ausgeführt werden.

## Patentansprüche

1. Verfahren zum quasi-unterbruchfreien Patchen von einem eine insbesondere sicherheitsrelevante Applikation ausführenden Windows-System (WR), umfassend:
a) Aufsetzen des die Applikation (ILTIS) ausführenden Windows-Systems (WR) in einer Produktiv-Instanz (2) mit einer eigenen Produktiv-Speicherinstanz (6) und einer Passiv-Instanz (4) mit einer eigenen Passiv-Speicherinstanz (8);
b) Installieren der Applikation (ILTIS) und ggfs. von für ihre Ausführung erforderlichen Daten auf einer weiteren Applikations-Speicherinstanz (10) und Verbinden dieser Applikations-Speicherinstanz (10) mit der Produktiv-Instanz (4) ;
c) Ausrüsten der Produktiv-Instanz (2) und der Passiv-Instanz (4) mit je einer Netzwerkkarte (12, 16 bzw. 14, 18) für ein Produktiv-Netzwerk (20) und ein Passiv-Netzwerk (22), wobei die Produktiv-Instanz (2) nur mit dem Produktiv-Netzwerk (20) und die Passiv-Instanz (4) nur mit dem Passiv-Netzwerk (22) verbunden ist,
d) Patchen oder Neu-Aufsetzen der Passiv-Instanz (4) über das Passiv-Netzwerk (22), wobei:
e) eine externe Supervisor-Instanz (iHME) bereitgestellt wird, mit der bedienergesteuert über eine der Supervisor-Instanz (iHME) eigenen Benutzeroberfläche:
e1) nach erfolgreicher Installation des Patches resp. der neuen Windows-Version die Produktiv-Instanz (2) und die Passiv-Instanz (4) heruntergefahren werden;
e2) die Applikations-Speicherinstanz (10) von der Produktiv-Instanz (2) auf die Passiv-Instanz (4) umgehängt wird;
e3) an der Produktiv-Instanz (2) die Netzwerkkarte (12) für das Produktiv-Netzwerk (20) durch die Netzwerkkarte (14) für das Passiv-Netzwerk (22) und an der Passiv-Instanz (4) die Netzwerkkarte (18) für das Passiv-Netzwerk (22) durch die Netzwerkkarte (16) für das Produktiv-Netzwerk (20) umgehängt werden; und
e4) nach erfolgreichem Abschluss der Schritte e1) bis e3) die bisherige Passiv-Instanz (4) als Produktiv-Instanz (2) und die bisherige Produktiv-Instanz (2) als Passiv-Instanz (4) neu gestartet werden.

2. Verfahren nach Anspruch 1,
**dadurch gekennzeichnet, dass**
nach einer vorgebbaren Zeitdauer auch die ehemalige Produktiv-Instanz (2) auch auf die neue Windows-Version gepatcht wird.

3. Verfahren nach Anspruch 1 oder 2,
**dadurch gekennzeichnet, dass**
nach dem Neustart der bisherigen Passiv-Instanz (4) als Produktiv-Instanz (2) und der bisherigen Produktiv-Instanz (2) als Passiv-Instanz (4) auch ein Rollback ausgeführt werden kann, der vorherige Produktiv-Instanz (2) dann auch wieder als Produktiv-Instanz (2) und die vorherige Passiv-Instanz (4) dann auch wieder als Passiv-Instanz (4) ausführt.

4. Verfahren nach einem der vorangehenden Ansprüche,
**dadurch gekennzeichnet, dass**
die Supervisor-Instanz (iHME) so ausgestaltet ist, dass benutzergesteuert über deren Benutzeroberfläche ein virtueller Applikationsrechner (WR) aufgesetzt wird, der die Produktiv-Instanz (2) mit eigener Produktiv-Speicherinstanz (6), die Passiv-Instanz (4) mit eigener Passiv-Speicherinstanz (8) und die Applikations-Speicherinstanz (10) umfasst.

5. Verfahren nach einem der vorhergehenden Ansprüche,
**dadurch gekennzeichnet, dass**
die mittels der Supervisor-Instanz (iHME) ausgelösten Schritte e1) bis e4) hard-codiert sind und damit über die Benutzeroberfläche der Supervisor-Instanz (10) benutzergesteuert ausgelöst werden.
